# EUROPÄISCHE PATENTANMELDUNG

(11) **EP 1 070 823 A2**
(43) Veröffentlichungstag der Anmeldung: **24.01.2001**
(21) Anmeldenummer: 00115570.4
(22) Anmeldetag: 19.07.2000
(51) Int. Cl.: E06B 3/54

(54) **Halterungsvorrichtung für Glasscheiben**

(30) Priorität: 19.07.1999 DE 19933119
(71) Anmelder: DORMA GmbH + Co. KG, 58256 Ennepetal (DE)
(72) Erfinder: Janutta, Reinhard, 33415 Verl (DE)

(57) **Zusammenfassung**

Die Erfindung bezieht sich auf eine Halterungsvorrichtung für Glasscheiben (1, 11, 12) mit einem äußeren (4, 16, 25) und einem inneren, (6, 17, 26) Beschlagteil, welche zur Halterung zumindest einer Glasscheibe (1, 11, 12) gegeneinander verspannbar sind, wobei zwischen dem jeweiligen Beschlagteil (4, 6, 16, 17, 25, 26) und der Glasscheibe (1, 11, 12) zumindest ein elastisches Element (8) eingelegt ist, dadurch gekennzeichnet, daß das elastische Element (8) einen Mantel (9) umfaßt, welcher einen Kern (10) vollständig umschließt.

## Beschreibung

Die Erfindung betrifft eine Halterungsvorrichtung für Glasscheiben, mit einem äußeren und inneren Beschlagteil, welche zur Halterung zumindest einer Glasscheibe, gegeneinander verspannbar sind, wobei zwischen dem jeweiligen Belag und der Glasscheibe zumindest ein elastisches Element eingelegt ist.

Der Stand der Technik zeigt unterschiedlichste Möglichkeiten, Glasscheiben an einem Gebäude oder Ähnlichem zu befestigen. Hierbei ist es wichtig, Spannungen in der Glasscheibe zu vermeiden, die zu einem Bruch oder einer Beschädigung führen könnten. Weiterhin müssen thermische Ausdehnungen ebenso kompensierbar sein, wie Maßabweichungen sowohl der Glasscheibe als auch der Befestigungsmittel und der Gebäude.

Aus den deutschen Offenlegungsschriften 44 45 724 und 44 00 979 ist es bekannt, die Glasscheibe mittels eines kegeligen Gegenstückes, welches ähnlich einer Senkkopfschraube ausgebildet ist, fest mit einem Trägerelement zu verbinden. Um ein ausreichendes Spiel vorzusehen und um die Möglichkeit zu schaffen, die oben beschriebenen Maßabweichungen, Ausdehnungen et cetera zu kompensieren, sind zwischen den Befestigungsvorrichungen und den Trägern jeweils Kugelgelenke angeordnet.

Die deutsche Offenlegungsschrift 195 19 527 beschreibt eine Halterung für Platten, bei welcher zwischen dem äußeren und dem inneren Beschlagteil und der Scheibe jeweils eine elastische Zwischenlage angeordnet ist. Zusätzlich erfolgt ein Ausgleich von Bewegungen, Maßungenauigkeiten oder Ähnlichem durch ein Gelenk zwischen der Befestigungsvorrichtung und dem Träger.

Die bekannten Ausgestaltungsformen sind zum einen sehr aufwendig in ihrer Konstruktion und damit auch in der Montage kostenintensiv. Weiterhin besteht bei derartigen, kompliziert aufgebauten Konstruktionen stets die Gefahr, daß bei der Montage Fehler unterlaufen, welche die Sicherheit beeinträchtigen.

Der Erfindung liegt die Aufgabe zugrunde, eine Halterungsvorrichtung für Glasscheiben zu schaffen, welche unter Vermeidung der Nachteile des Standes der Technik einfach aufgebaut ist, kostengünstig hergestellt werden kann und ein Höchstmaß an Sicherheit gewährleistet.

Erfindungsgemäß wird die Aufgabe durch die Merkmale des Hauptanspruches gelöst, die Unteransprüche zeigen weitere vorteilhafte Ausgestaltungen der Erfindung.

Im Rahmen der Erfindung ist somit vorgesehen, daß das elastische Element einen Mantel umfaßt, welcher einen Kern vollständig umschließt.

Die erfingungsgemäße Halterungsvorrichtung zeichnet sich durch eine Reihe erheblicher Vorteile aus. Durch den beschriebenen Aufbau des elastischen Elements wird die Möglichkeit geschaffen, das Material des Mantels sowie des Kerns unabhängig voneinander zu wählen und den jeweiligen Anforderungen anzupassen. Es kann somit ein Mantel vorgesehen sein, der relativ starr und unempfindlich ist, während das Material des Kerns sehr weich und nachgiebig sein kann. Es sind jedoch auch andere Kombinationen möglich, bei welchen das Material des Mantels die bei dem eigentlichen Einspann- und Halterungsvorgang auftretenden Kräfte sicher übertragen kann, während das Material des Kerns der zusätzlichen Pufferung oder Dämpfung dient. Durch den zweischaligen Aufbau des elastischen Elements sind somit vielfältige Variationsmöglichkeiten gegeben, um thermische Schwankungen und die damit verbundene Expansion der Scheiben zu berücksichtigen, um Deformationen durch zusätzliche Belastungen, wie Winddruck, auszugleichen, um Gebäudeungenauigkeiten zu kompensieren und um sonstige Maßungenauigkeiten oder Bewegungen zu ermöglichen.

Das erfingungsgemäße elastische Element kann in besonders einfacher Weise zwischen das äußere und das innere Beschlagteil und die jeweilige Fläche der Glasscheibe eingespannt werden, es sind keine sonstigen zusätzlichen Konstruktionselemente erforderlich. Hierdurch vereinfacht sich der Aufbau der erfindungsgemäßen Halterungsvorrichtung ganz erheblich.

Der Kern des elastischen Elementes, welcher durch den Mantel vollständig umschlossen ist, kann erfingungsgemäß beispielsweise ein elastisches Material umfassen, welches sich hinsichtlich seiner Elastizität von dem Material des Mantels unterscheidet. Somit kann der Kern weicher oder härter ausgebildet werden. Der Kern kann auch aus einem geschäumten Material gefertigt sein, welches beispielsweise sehr elastisch und wenig formstabil ist.

Eine weitere, vorteilhafte Ausgestaltung der Erfindung ist gegeben, wenn der Kern aus einem Medium oder Material besteht, welches Gas enthält. Hierbei kann der Kern bei guter Dämpfung und Elastizität leicht verformt werden.
Eine andere Variante besteht darin, den Kern in flüssiger Form auszubilden und somit den Mantel mit Wasser, Öl, Gel oder Ähnlichem zu füllen. Es versteht sich, daß erfingungsgemäß auch Misch-Bauweisen möglich sind. Hinsichtlich der Gasfüllung können Luft- oder Edelgase verwendet werden.

Unter Verwendung des erfindungsgemäßen elastischen Elementes ist es möglich, relativ große Verlagerungen der Glasscheiben bei geringen Rückstellkräften zu realisieren, da das an bestimmten Bereich verdrängte Material oder Medium des Kerns zu anderen Bereichen hin ausweichen oder fließen kann.

Als besonders vorteilhaft erweist es sich, wenn zwei elastische Elemente mit jeweils einem separaten Kern einstückig miteinander verbunden sind. Die beiden separaten Kerne bilden somit zwei Kammern, die in oben beschriebener Weise mit entsprechendem Medium oder Material gefüllt werden können. Abgesehen von der vereinfachten Montage eines derartigen elastischen Elementes weist die Teilung den großen Vorteil auf, daß eine unerwünschte axiale Verlagerung der Glasscheiben, bezogen auf die Befestigungsachse, vermieden werden kann. Die Glasscheiben können somit nicht durchsacken, vielmehr ist in jeder Position eine sichere Halterung gewährleistet.

Als besonders günstig erweist es sich, wenn das elastische Element in seiner nicht-verformten Ausgangsform rohrförmig ist. Somit kann das elastische Element bei der Montage in einfachster Weise durch eine Ausnehmung der Glasscheibe durchgeführt werden, die erforderliche Verformung erfährt das elastische Element dann durch die Verspannung des äußeren und des inneren Beschlagteiles. Dabei ist es besonders vorteilhaft, wenn der dem Beschlagteil zugewandte Bereich des elastischen Elements so ausgebildet ist, daß er durch das Beschlagteil im eingebauten Zustand flanschartig verformbar ist. Das elastische Element kleidet somit nicht nur die Ausnehmung der Glasscheibe aus, sondern bildet auch eine sichere Auflage für das äußere beziehungsweise das innere Beschlagteil.

Wie oben erwähnt, ist es im Rahmen der Erfindung möglich, das Material des Kerns in Form eines flüssigen oder gasförmigen Mediums auszubilden. Um eine gleichmäßige Lastverteilung auf mehrere Auflager zu verbessern, ist es vorteilhaft, wenn benachbarte Kerne benachbarter elastischer Elemente über zumindest eine Leitung miteinander verbunden sind. Das Material der Kerne kann somit von einem Kern zum anderen ausweichen, wenn besondere Belastungen, beispielsweise durch Winddruck, Schnee, Erdbeben oder ähnliches auftreten. Da die einzelnen Beschlagteile annähernd dieselbe Kolbenfläche bezüglich des Druckaufbaus auf das elastische Element aufweisen, ergibt sich eine gleichmäßige Druckverteilung, die Spannungen sowohl in den Glasscheiben als auch im Unterbau verhindert. Es können somit auch sehr große Glasscheiben spannungsfrei gelagert werden.

In einer Weiterbildung der Erfingung ist es möglich, den Kern des elastischen Elements mit einem Drucksensor zu verbinden. Dieser kann sowohl beim Einbau der Glasscheiben genutzt werden, um eine ausreichende Einspannung unter Vermeidung unzulässiger Spannungen zu erreichen, als auch um Überbeanspruchungen eingebauter Glasscheiben anzuzeigen. Besonders günstig ist es im letzteren Falte, wenn der Drucksensor mit einer Alarmeinrichtung gekoppelt ist, welche eine Überbelastung
einer Glasfassade oder ähnlichem melden kann.

Im folgenden wird die Erfindung anhand von Ausführungsbeispielen in Verbindung mit der Zeichnung beschrieben. Dabei zeigt;
- Figur 1:: Eine schematische Schnittansicht einer erfindungsgemäßen Halterungsvorrichtung im montierten Zustand.
- Figur 2:: Eine Ansicht, ähnlich Fig. 1, in einem vormontierten Zustand, bei welchem das elastische Element unverformt eingebracht ist.
- Figur 3:: Eine Ansicht, ähnlich Fig. 1, eines Ausführungsbeispiels mit einer Doppelscheibe oder Isolierglasscheibe.
- Figur 4:: Eine Ansicht eines weiteren Ausführungsbeispiels, ähnlich Fig. 1, mit zwei abgewandelten Beschlagteilen.
- Figur 5:: Eine weitere Ausgestaltungsvariante mit einer nichtzylindrischen Ausnehmung einer Glasscheibe.
- Figur 6:: Eine Schnittansicht mehrerer Halterungselemente, welche miteinander verbunden sind.

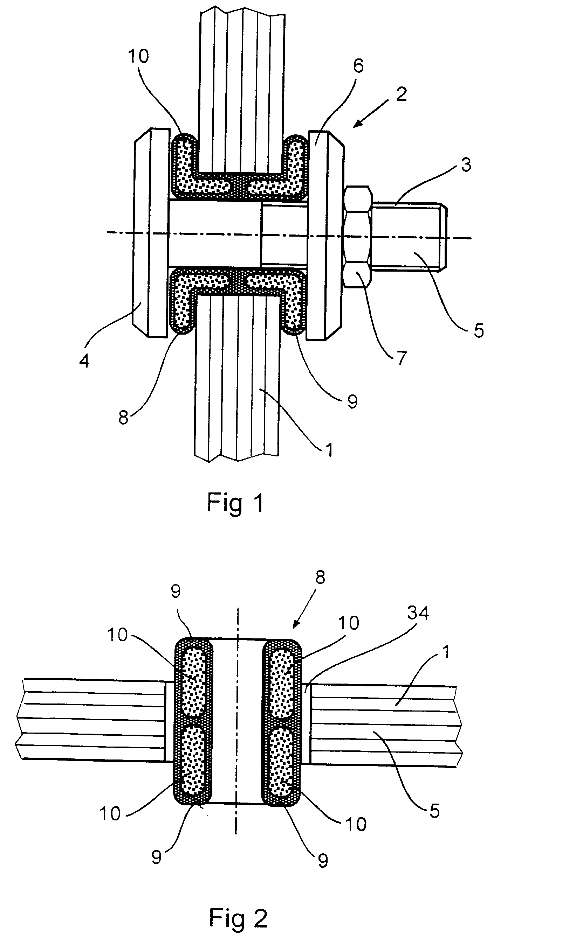

Das Ausführungsbeispiel der Fig. 1 zeigt in der Seitenansicht im Schnitt eine Glasscheibe 1, welche als Sicherheitsgtasscheibe oder Verbundglasscheibe mit zwischengelegten Kunststofffolien ausgebildet sein kann. Es versteht sich, daß die Erfindung auch für einfache Glasscheiben anwendbar ist. Weiterhin versteht es sich, daß die vorliegende Halterungsvorrichtung sowohl zur Halterung einer einzigen Glasscheibe als auch zur Befestigung der Randbereiche zweier benachbarter Glasscheiben verwendbar ist.
Die in Fig. 1 gezeigte Halterungsvorrichtung umfaßt ein äußeres Beschlagteil 4 sowie ein inneres Beschlagteil 6, welche jeweils in Form einer kreisrunden Platte ausgebildet sind. Bei dem gezeigten Ausführungsbeispiel ist das äußere Beschlagteil 4 einstückig mit einem Befestigungsschaft 5 versehen, welcher an seinem freien Ende ein Gewinde 3 aufweist, auf welches eine Mutter 7 aufschraubbar ist, um das innere Beschlagteil 6 anzupressen.

Es versteht sich, daß die Innenseite und die Außenseite der Halterungsvorrichtung auch umkehrbar sind, so daß die Glasscheibe 1 beispielsweise an einer außen liegenden Tragkonstruktion gehaltert werden kann.

Das Bezugszeichen 2 in Fig. 1 zeigt die gesamte Halterungsvorrichtung.

Aus der Darstellung der Fig. 1 ist ersichtlich, daß das elastische Element 8 einen Mantel 9 umfaßt, in welchem ein Kern 10 angeordnet ist. Der Kern 10 kann ein geschäumtes Material, wie etwa Moosgummi umfassen, er kann mit einer Flüssigkeit oder einem Gas gefüllt sein oder Mischungen derartiger Zusammensetzungen aufweisen.

Die Fig. 2 zeigt einen Vor-Montagezustand, bei welchem das elastische Element 8 in seiner Ausgangsform rohrförmig ausgebildet ist. Es kann somit in eine zylindrische Ausnehmung einer Glasscheibe 1 eingelegt werden.

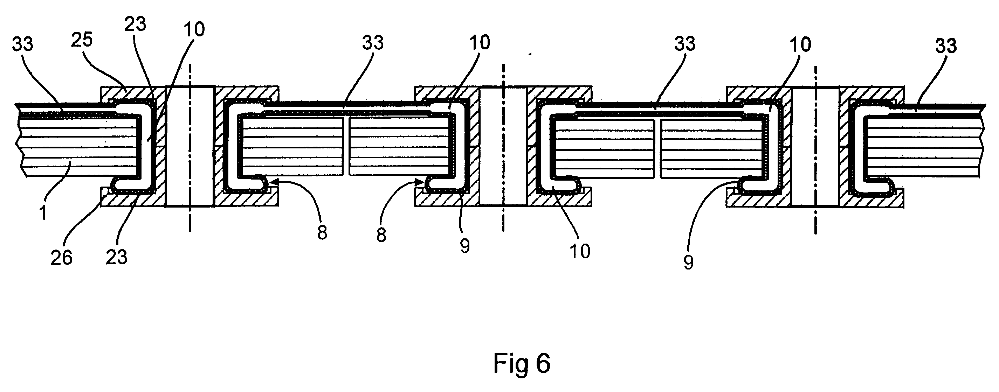

Bei dem in den Fig. 1 und 2 gezeigten Ausführungsbeispiel ist das elastische Element 8 jeweils doppelt ausgebildet, das heißt, es weist zwei voneinander getrennte Kerne 10 auf. Im Rahmen der Erfindung ist es jedoch auch möglich, lediglich
einen durchgehenden Kern 10 vorzusehen, so wie dies beispielsweise in Fig. 6 gezeigt ist.

Das rohrförmige elastische Element 8 gemäß Fig. 2 wird beim Anlegen der äußeren und inneren Beschlagteile 4, 6 so verformt, daß sich ein Flansch gemäß der Darstellung von Fig. 1 ergibt.

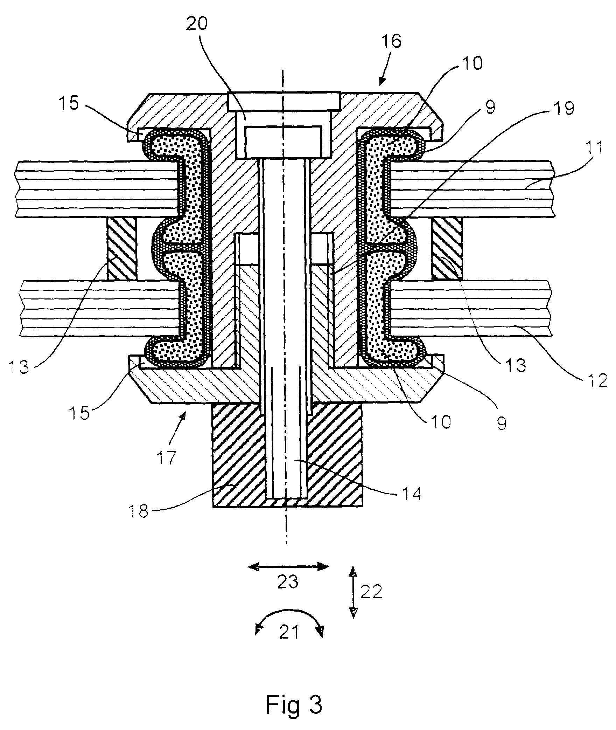

Das Ausführungsbeispiel der Fig. 3 zeigt eine abgewandelte bauliche Variante, bei welcher zwei Glasscheiben 11 und 12 gelagert werden, die mittels eines Distanzhalters 13 voneinander beabstandet sind. Die Scheiben 11 und 12 können mittels des Distanzhalters auch fest miteinander verbunden sein so wie es bei Isolierglasscheiben üblich ist.

Ein äußeres Beschlagteil 16 und ein inneres Beschlagteil 17 weisen an ihrer der Scheibe zugewandten Seite jeweils eine Vertiefung 15 auf, welche das elastische Element lagert und die Flanschbildung vereinfacht. Das elastische Element kann sich, wie gezeigt, teilweise in den Zwischenraum zwischen den beiden Glasscheiben 11 und 12 erstrecken.

Bei dem gezeigten Ausführungsbeispiel sind die Beschlagteile 16 und 17 mittels eines Gewindes 19 miteinander verspannt, so daß die Verspannung unabhängig von der nachfolgenden Montage erfolgt. Zu der Montage wird eine Befestigungsschraube 14 durch die beiden Beschlagteile 16, 17 geführt und mit einer Unterkonstruktion 18 verbunden. Der Kopf der Schraube 14 kann in einer Sackbohrung 20 des äußeren Beschlagteils 16 aufgenommen sein.

In Fig. 3 sind die möglichen Bewegungsrichtungen 21, 22 und 23 vereinfacht dargestellt, es sind somit seitliche sowie axiale Verschiebungen (23 bzw. 22) möglich, sowie Verschwenkungen um eine Senkrechte zur Achse der Befestigungsschraube 14 verlaufende Achse (siehe Bewegungsrichtung 21).

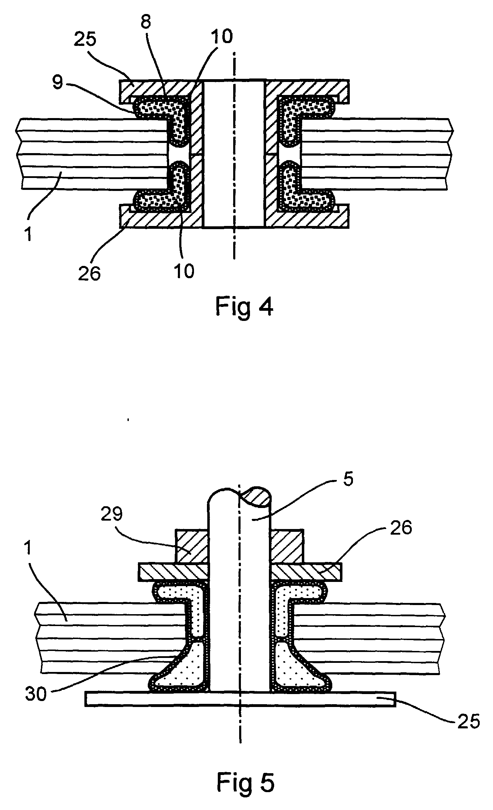

Die Fig. 4 zeigt ein weiteres Ausführungsbeispiel, bei welchem zwei separate elastische Elemente 8 verwendet sind. Diese weisen jeweils ebenfalls einen Mantel 9 sowie einen Kern 10 auf. Ein äußeres Beschlagteil 25 sowie ein inneres Beschlagteil 26 sind ebenfalls mit einer Ausnehmung versehen, analog Fig. 3.

In Fig. 5 ist ein weiteres Ausführungsbeispiel dargestellt, bei welchem das äußere Beschlagteil 25 mit einem Befestigungsschaft 5 versehen ist, der, ähnlich Fig. 1, ein Gewinde aufweist, auf welches eine Mutter 29 aufschraubbar ist, um das innere Beschlagteil 26 vorzuspannen. Bei diesem Ausführungsbeispiel ist an der Außenseite der Glasscheibe 1 eine Senkung 30 vorgesehen, die zu einer zusätzlichen Zentrierung dienen kann.

Die Fig. 6 zeigt ein Ausführungsbeispiel, bei welchem elastische Elemente 8 verwendet werden, die jeweils nur einen Kern 10 haben. Die einzelnen Kerne 10 sind jeweils über schlauchartige Leitungen 33 oder über geeignete Röhren oder ähnliches verbunden. Somit ist es sowohl möglich, benachbarte Glasscheiben spannungsfrei zu lagern, als auch mehrere Befestigungspunkte einer einzigen Glasscheibe zur Lastverteilung zu verbinden. Die Beschlagteile 25 und 26 entsprechen dem Ausführungsbeispiel der Fig. 4.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

Zusammenfassend ist folgendes festzustellen:

Die Erfindung bezieht sich auf eine Halterungsvorrichtung für Glasscheiben 1, 11, 12 mit einem äußeren 4, 6, 25 und einem inneren, 6, 17, 26 Beschlagteil, welche zur Halterung zumindest einer Glasscheibe 1, 11, 12 gegeneinander verspannbar sind, wobei zwischen dem jeweiligen Beschlagteil 4, 6, 16, 17, 25, 26 und der Glasscheibe 1, 11, 12 zumindest ein elastisches Element 8 eingelegt ist, dadurch gekennzeichnet, daß das elastische Element 8 einen Mantel 9 umfaßt, welcher einen Kern 10 vollständig umschließt.

## Patentansprüche

1. Halterungsvorrichtung für Glasscheiben (1, 11, 12) mit einem äußeren (4, 6, 25) und einem inneren, (6, 17, 26) Beschlagteil, welche zur Halterung zumindest einer Glasscheibe (1, 11, 12) gegeneinander verspannbar sind, wobei zwischen dem jeweiligen Beschlagteil (4, 6, 16, 17, 25, 26) und der Glasscheibe (1, 11, 12) zumindest ein elastisches Element (8) eingelegt ist, dadurch gekennzeichnet, daß das elastische Element (8) einen Mantel (9) umfaßt, welcher einen Kern (10 vollständig umschließt.

2. Halterungsvorrichtung nach Anspruch 1, dadurch gekennzeichnet, daß der Kern (10) ein elastisches Material umfaßt.

3. Halterungsvorrichtung nach Anspruch 2, dadurch gekennzeichnet, daß der Kern (10) ein geschäumtes Material umfaßt.

4. Halterungsvorrichtung nach Anspruch 2, dadurch gekennzeichnet, daß der Kern (10) ein gasenthaltendes Medium umfaßt.

5. Halterungsvorrichtung nach Anspruch 2, dadurch gekennzeichnet, daß der Kern (10) eine Flüssigkeit umfaßt.

6. Halterungsvorrichtung nach einem der Ansprüche 1 bis 5, dadurch gekennzeichnet, daß zwei elastische Elemente (8) mit jeweils einem separaten Kern (10) einstückig miteinander verbunden sind.

7. Halterungsvorrichtung nach einem der Ansprüche 1 bis 6, dadurch gekennzeichnet, daß das elastische Element(8) in seiner nichtverformten Ausgangsform rohrförmig ist.

8. Halterungsvorrichtung nach Anspruch 7, dadurch gekennzeichnet, daß der dem Beschlagteil (4, 6, 16, 17, 25, 26) zugewandte Bereich des elastischen Elements (8) durch das Beschlagteil (4, 6, 16, 17, 25, 26) im eingebauten Zustand flanschartig verformbar ist.

9. Halterungsvorrichtung nach einem der Ansprüche 4 bis 8, dadurch gekennzeichnet, daß benachbarte Kerne (10) benachbarter elastischer Elemente (8) über zumindest eine Leitung (33) verbunden sind.

10. Halterungsvorrichtung nach einem der Ansprüche 1 bis 9, dadurch gekennzeichnet, daß der Kern (10) mit einem Drucksensor verbunden ist.

11. Halterungsvorrichtung nach Anspruch 10, dadurch gekennzeichnet, daß an den Drucksensor eine Alarmeinrichtung angeschlossen ist.
